# EUROPEAN PATENT APPLICATION

(11) **EP 4 671 607 A1**
(43) Date of publication of application: **31.12.2025**
(21) Application number: 23924218.3
(22) Date of filing: 12.12.2023
(51) Int. Cl.: F21S 43/241, F21S 43/14, F21W 103/20, F21Y 115/10

(54) **VEHICLE LAMP BODY DEVICE**

(30) Priority: 20.02.2023 JP 2023024247
(71) Applicant: Mitsuba Corporation, Kiryu-shi Gunma 376-8555 (JP)
(72) Inventor: UCHIDA Jun, Kiryu-shi, Gunma 376-8555 (JP)
(74) Representative: Becker Kurig & Partner Patentanwälte mbB
(86) International application number: PCT/JP2023/044513
(87) International publication number: WO 2024/176574

(57) **Abstract**

Provided is a vehicle lamp body device with which the direction of exit light, which is caused to exit to the outside, can be expanded further toward the outside in the vehicle width direction. The vehicle lamp body device comprises a light source and a light guide member (11). The light guide member comprises an incident portion, an exit wall (18), an intermediate light guide wall (19), a first reflection surface, a second reflection surface (21), and a third reflection surface (22). The exit wall extends in the vehicle front-rear direction, and one end side thereof in the extending direction forms an exit surface. The intermediate light guide wall guides the light incident on the incident portion to the other end side of the exit wall. The first reflection surface is disposed in an incident region of the intermediate light guide wall and internally reflects, as first parallel light, the light incident on the incident portion. The second reflection surface is disposed in an incident region on the other end side of the exit wall and internally reflect the first parallel light as second parallel light. The third reflection surface is disposed in a region facing the second reflection surface on the other end side of the exit wall and reflects part of the second parallel light as lateral transmitted light (Ls) that is transmitted through a side surface (18so) of the exit wall.

## Description

### Technical Field

The invention relates to a vehicle lamp body device.

### Related Art

As a vehicle lamp body device such as a turn signal lamp or a brake lamp, a device is known that guides light emitted from a light source such as an LED through a light guide member to an exit surface as parallel light directed in the vehicle front-rear direction (for example, see Patent Document 1).

The vehicle lamp body device described in Patent Document 1 includes a light source and a light guide member, and the exit surface of the light guide member in the vehicle front-rear direction is formed approximately along the outline portion of the lamp body device. The light guide member includes: an incident portion on which light from the light source is incident; an exit wall extending along the vehicle front-rear direction, the tip end side of the exit wall in the extending direction being arranged as the exit surface; and an intermediate light guide wall guiding light incident on the incident portion to the base end side of the exit wall. In the incident region of the intermediate light guide wall, a first reflection surface is provided to internally reflect the light incident on the incident portion as first parallel light toward the base end side of the exit wall. Additionally, at the base end side of the exit wall, a second reflection surface is provided to internally reflect the first parallel light guided by the intermediate light guide wall as second parallel light directed toward the tip end side of the exit wall.
In addition, on the exit surface of the light guide member, a diffusion portion with an uneven shape is provided to diffuse the light emitted to the outside in multiple directions.

The vehicle lamp body device can emit light emitted from the light source to the exterior from the exit surface as parallel light substantially along the outline portion through internal reflection due to the first reflection surface and the second reflection surface of the light guide member. In the case of the vehicle lamp body device, since parallel light along the vehicle front-rear direction is emitted from the exit surface, the parallel light becomes visible from the exterior as bright linear light substantially traveling along the outline portion.

### [Prior Art Document(s)]

### [Patent Document(s)]

Patent Document 1: Japanese Laid-open No. 2012-243734

### SUMMARY OF INVENTION

### Technical Problem

The vehicle lamp body device described in Patent Document 1 diffuses the second parallel light along the vehicle front-rear direction that passes through the exit wall in multiple directions by using the diffusion portion of the exit surface. However, since the diffusion portion provided on the exit surface is formed in a fine uneven shape, there is a limit to expanding the orientation of the light emitted from the exit surface toward the vehicle width outer side. Currently, to improve the visibility of lighting from the exterior, it is desired to expand the orientation of the emitted light emitted to the exterior further toward the vehicle width outer side.

Therefore, the invention aims to provide a vehicle lamp body device that can expand the orientation of the emitted light emitted to the exterior further toward the vehicle width outer side.

### [Means for solving the issues]

To solve the issues, a vehicle lamp body device according to an aspect of the invention adopts a configuration as follows.
That is, the vehicle lamp body device according to an aspect of the invention includes: a light source; and a light guide member, guiding light incident from the light source to an exit surface as parallel light in a vehicle front-rear direction. The light guide member includes: an incident portion, to which light from the light source is incident; an exit wall, extending in the vehicle front-rear direction, an end side of the exit wall in an extending direction being arranged as the exit surface; an intermediate light guide wall, guiding light incident on the incident portion to an other end side of the exit wall; a first reflection surface, disposed in an incident region of the intermediate light guide wall, and internally reflecting, as first parallel light, light incident on the incident portion toward the other end side of the exit wall; a second reflection surface, disposed in an incident region on the other end side of the exit wall, and internally reflecting, as second parallel light, the first parallel light toward the end side of the exit wall; and a third reflection surface, disposed in a region opposite to the second reflection surface on the other end side of the exit wall, and reflecting a portion of the second parallel light as lateral transmitted light passing through a side surface of the exit wall facing an outer side in a vehicle width direction.

In the configuration, when light is emitted from the light source, the light is input to the incident portion of the light guide member. The light input to the incident portion is guided, as the first parallel light, through the intermediate light guide wall toward the other end side of the exit wall by internal reflection due to the first reflection surface. The light guided to the other end side of the exit wall is guided, as the second parallel light, through the exit wall toward the end side of the exit wall by internal reflection due to the second reflection surface. At this time, a portion of the second parallel light is reflected by the third reflection surface, and the remainder of the second parallel light is emitted from the exit surface on the end side of the exit wall to the exterior. The second parallel light reflected by the third reflection surface passes through the side surface on the vehicle width outer side of the exit wall and is emitted as the lateral transmitted light by being further oriented toward the vehicle width outer side.

The third reflection surface may be a total reflection surface that totally reflects the second parallel light.

In such case, there is no need to attach a reflector to the back portion of the third reflection surface 22 in the light incident direction, and the vehicle lamp body device can be manufactured easily at a low cost.

The second reflection surface and the third reflection surface may be formed so that, when viewed in a vehicle front-rear direction, an inner region of the second reflection surface in the vehicle width direction is overlapped with the third reflection surface.

In such case, a portion of the second parallel light reflected by the second reflection surface can be reliably reflected toward the third reflection surface.

The third reflection surface and the side surface of the exit wall may be formed, so that reflected light reflected by the third reflection surface is input to the side surface of the exit wall at an incident angle that does not exceed a critical angle.

In such case, the reflected light reflected by the third reflection surface reliably passes through the side surface of the exit wall and is emitted to the exterior as lateral transmitted light.

### [Inventive effects]

In the vehicle lamp body device according to the invention, the third reflection surface is disposed in the region opposite to the second reflection surface on the other end side of the exit wall in the light guide member, and a portion of the second parallel light toward the end side of the exit wall is reflected by the third reflection surface, thereby being emitted as the lateral transmitted light passing through the side surface of the exit wall. Therefore, in the case where the vehicle lamp body device according to the invention is adopted, the direction of the emitted light to the exterior can be further expanded toward the vehicle width outer side.

### BRIEF DESCRIPTION OF DRAWINGS

FIG. 1 is a front view of the vehicle lamp body device of the embodiment.
FIG. 2 is a front view with a portion of the vehicle lamp body device of the embodiment broken away.
FIG. 3 is a cross-sectional view taken along line III-III of FIG. 1.
FIG. 4 is an enlarged view of a portion IV of FIG. 3.
FIG. 5 is an enlarged view of a portion V of FIG. 4.
FIG. 6 is perspective view of a light guide member of the embodiment.

### DESCRIPTION OF EMBODIMENTS

The following describes an embodiment of the invention based on the drawings. In appropriate places in the drawings, an arrow FR indicating the front of the vehicle, an arrow UP indicating the top of the vehicle, and an arrow LH indicating the left side of the vehicle are indicated.

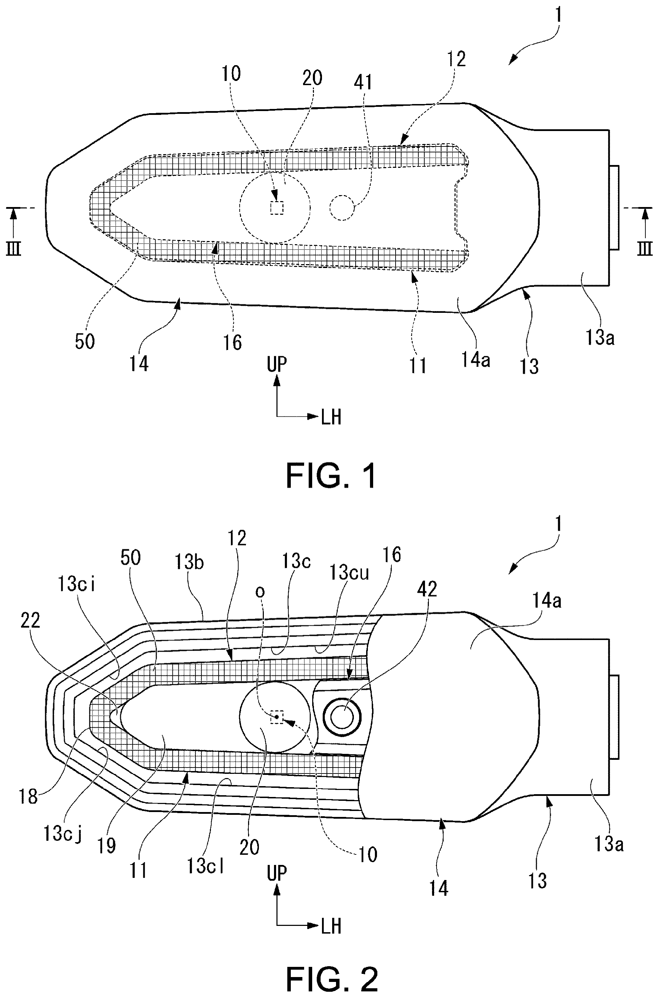

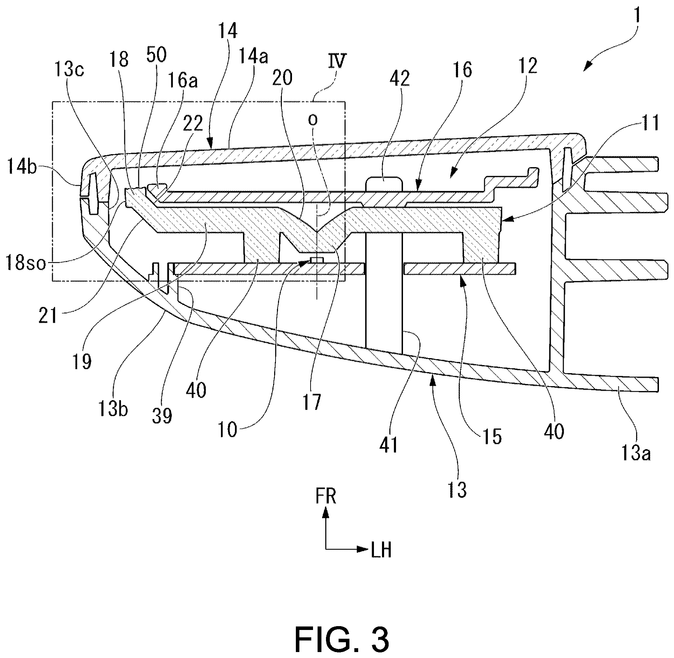

FIG. 1 is a front view of a turn signal lamp 1, which is a form of a vehicle lamp body unit, and FIG. 2 is a front view showing a portion of the turn signal lamp 1 broken away. Also, FIG. 3 is a cross-sectional view taken along line III-III of FIG. 1 of the turn signal lamp 1.
The turn signal lamp 1 shown in the drawings is a turn signal lamp disposed on the front right side of a motorcycle. The turn signal lamp 1 includes a lamp body unit 12 having a light emitting element 10, such as an LED as a light source, and a light guide member 11 made of a transparent resin material such as acrylic resin. The lamp body unit 12 is disposed inside a lamp housing 13.

The lamp housing 13 includes a base 13a attached to the vehicle body, and a unit accommodation portion 13b extending from the base 13a to the vehicle width outer side. The unit accommodation portion 13b has an opening on the vehicle front side, and the lamp body unit 12 is accommodated inside the opening 13c. An opening 13c of the unit accommodation portion 13b is formed, when viewed in a front view, as an approximately polygonal shape elongated in the vehicle width direction (an approximately pentagonal shape formed by combining a triangular shape with the end of the vehicle width outer side of a rectangular shape extending long in the vehicle width direction). The front side of the opening 13c of the lamp housing 13 is closed by an outer lens 14 attached to the front portion of the unit accommodation portion 13b.

As shown in FIG. 3, the outer lens 14 includes an approximately flat lens main wall 14a disposed on the front side of the opening 13c and a peripheral wall 14b protruding rearward from the peripheral portion of the lens main wall 14a. The end surface of the peripheral wall 14b abuts against the peripheral portion of the opening 13c of the lamp housing 13, and, in such state, the outer lens 14 is fixed to the lamp housing 13 through uneven engagement, screwing, etc. The outer lens 14 is formed of a transparent resin material that allows light to pass through.

The lamp body unit 12 includes the light emitting element 10, a substrate 15 in which the light emitting element 10 is mounted on the front surface, the light guide member 11, and a shielding cover 16 that shields a region where light guidance is not required on the front surface side of the light guide member 11.

The light guide member 11 includes an incident portion 17 on which light from the light emitting element 10 is incident, an exit wall 18 disposed approximately along a portion of the opening 13c of the unit accommodation portion 13b (an upper side 13cu, inclined sides 13ci, 13cj, and a lower side 13cl), and an intermediate light guide wall 19 that guides light incident on the incident portion 17 to a base side (the other end side) of the exit wall 18. The tip end surface of the exit wall 18 facing the vehicle front side serves as an exit surface 50 that emits light incident from the light emitting element 10 on the incident portion 17 toward the vehicle front side. A diffusion portion 51 is provided on the exit surface 50 and has a fine uneven shape for diffusing the light to be emitted toward the vehicle front side in multiple directions.

The intermediate light guide wall 19 is formed in a shape in front view slightly smaller than and similar to the opening 13c of the unit accommodation portion 13b. The intermediate light guide wall 19 is a light guide wall that stands upright, and the front surface of the intermediate light guide wall 19 directly faces the vehicle front. The incident portion 17 is disposed in the central region of the intermediate light guide wall 19 in the rear view. The incident portion 17 is bulged in a truncated conical shape from the rear surface of the intermediate light guide wall 19 toward the vehicle rear side.

Additionally, as shown in FIG. 3, a contact seat 40 that abuts against the front surface of the substrate 15 is protrusively provided on the rear surface of the intermediate light guide wall 19. The substrate 15 is supported by a support rib 39 protrusively provided within the unit accommodation portion 13b of the lamp housing 13. In such state, the contact seat 40 of the intermediate light guide wall 19 abuts against the front surface of the substrate 15. Furthermore, a boss portion 41 that penetrates the substrate 15 and the intermediate light guide wall 19 is protrusively provided in the unit accommodation portion 13b of the lamp housing 13. A screw hole (not shown) is formed on the end surface of the boss portion 41. A shaft portion of a screw 42 that penetrates through the shielding cover 16 from the front side is threaded into the screw hole. The light guide member 11 is fixed to the lamp housing 13 by pressing the intermediate light guide wall 19 against the substrate 15 through tightening the shielding cover 16 to the boss portion 41 by the screw 42.

The exit wall 18 stands up (extends) from the peripheral portion of the intermediate light guide wall 19 toward the vehicle front side. The standing direction (extending direction) of the exit wall 18 is perpendicular to the extending direction of the intermediate light guide wall 19. In the embodiment, the exit wall 18 stands up (extends) toward the vehicle front side from the sides of the peripheral portion of the intermediate light guide wall 19, excluding the side on the vehicle width inner side.

Furthermore, as shown in FIG. 3, the tip end side region of the exit wall 18, which stands up from the peripheral portion of the intermediate light guide wall 19 toward the vehicle front side, protrudes toward the vehicle front side with respect to the front end surface of the unit accommodation portion 13b of the lamp housing 13. That is, a portion of the outer side surface of the exit wall 18 is opposite to the inner surface of the peripheral wall 14b of the outer lens 14 positioned on the vehicle front side with respect to the unit accommodation portion 13b.

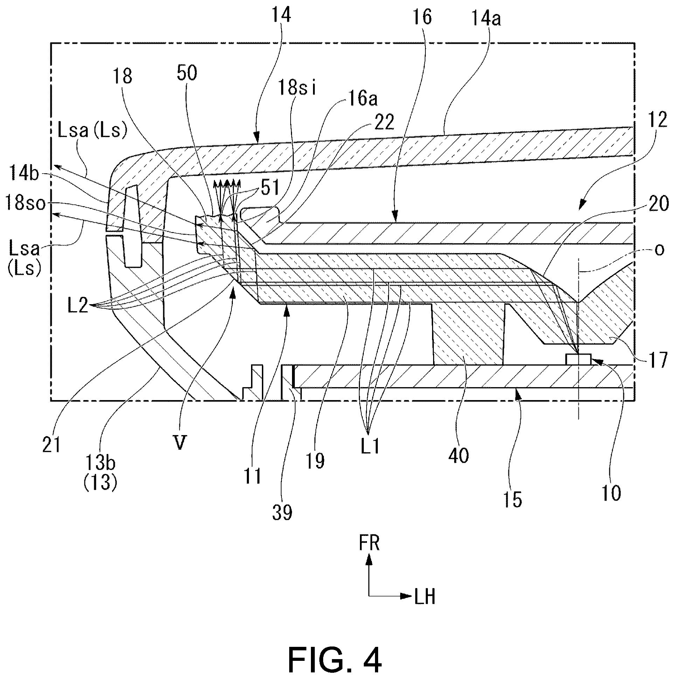

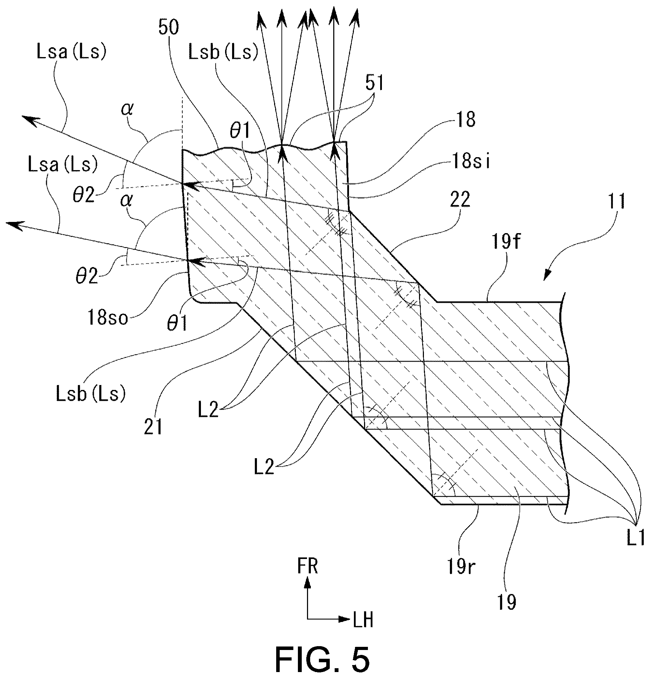

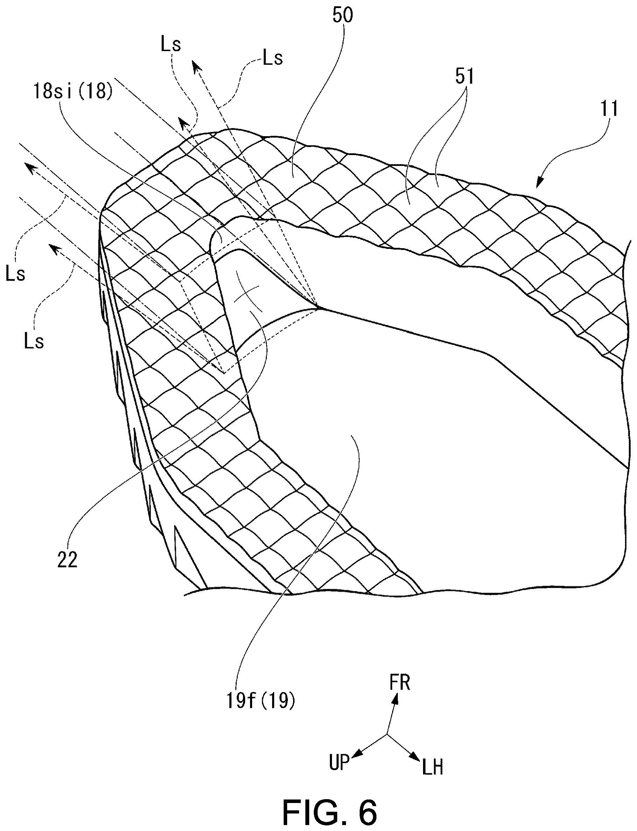

FIG. 4 is an enlarged view of a portion IV in FIG. 3, and FIG. 5 is an enlarged view of a portion V in FIG. 4. Additionally, FIG. 6 is a perspective view of the vehicle width outer region of the light guide member 11 as viewed from the vehicle front side.
A first reflection surface 20 is provided in the incident region (the region on the front side of the incident portion 17) of the intermediate light guide wall 19. The first reflection surface 20 internally reflects the light incident on the incident portion 17 as first parallel light L1 toward the base side of the exit wall 18. The first reflection surface 20 is formed by a rotational curved surface that is recessed in a approximately conical shape toward the vehicle rear side with respect to the front surface of the intermediate light guide wall 19. The rotational curved surface forming the first reflection surface 20 is a rotational curved surface centered on an axis o passing through the center (or the vicinity of the center) of each of the incident portion 17 and the light emitting element 10. The light incident on the incident portion 17 from the light emitting element 10 is internally reflected (totally reflected) radially by the first reflection surface 20 in the approximately conical shape, and travels as the first parallel light L1 toward the base end side of the exit wall 18 within the intermediate light guide wall 19.

A second reflection surface 21 is provided in the incident region on the base end side of the exit wall 18 (the outer end region of the intermediate light guide wall 19). The second reflection surface 21 internally reflects, as second parallel light L2, the first parallel light L1 reaching the incident region toward the tip end side of the exit wall 18 (toward the vehicle front side). The second reflection surface 21 reflects the light (first parallel light L1) internally reflected uniformly in the radial direction from the first reflection surface 20 in the approximately conical shape, as the second parallel light L2, toward the vehicle front side on the outer peripheral side of the intermediate light guide wall 19. Therefore, the second reflection surface 21 is not a single continuous surface, but is divided into multiple prism surfaces in a direction along the outer peripheral edge portion of the intermediate light guide wall 19. FIGs. 3 to 5 show a portion among the second reflection surface 21 divided into multiple prism surfaces, the portion being positioned on the vehicle width outermost side. Hereinafter, the second reflection surface 21 shown in FIGs. 3 to 5 may be referred to as "the second reflection surface 21 on the vehicle width outer side".

As shown in FIGs. 4 and 5, the second reflection surface 21 on the vehicle width outer side obliquely extends, at approximately 45°, from the vicinity of the rear end portion of a side surface 18so on the outer side of the exit wall 18 (the side surface facing the vehicle width outer side) toward the rear surface 19r of the intermediate light guide wall 19. The second reflection surface 21 on the vehicle width outer side extends to a position on the vehicle width inner side that exceeds the position of a side surface 18si on the inner side of the exit wall 18 (the side surface facing the vehicle width inner side). That is, the rear end portion of the second reflection surface 21 on the vehicle width outer side is offset to the vehicle width inner side with respect to the side surface 18si on the inner side of the exit wall 18.

In addition, as shown in FIGs. 4 and 5, a third reflection surface 22 is provided in the region opposite to the second reflection surface 21 on the vehicle width outer side at the base end side of the exit wall 18. The third reflection surface 22 reflects a portion of the second parallel light L2 reflected by the second reflection surface 21. The third reflection surface 22 is configured as a total reflection surface that totally reflects the second parallel light L2 reflected by the second reflection surface 21. The front end portion of the third reflection surface 22 is connected to the side surface 18si on the inner side of the exit wall 18, and the rear end portion of the third reflection surface 22 is connected to a front surface 19f of the intermediate light guide wall 19. The second reflection surface 21 on the vehicle width outer side and the third reflection surface 22 on the vehicle width inner side are formed so that, when viewed from the vehicle front side, the vehicle width inner region of the second reflection surface 21 overlaps with the third reflection surface 22.
In the case of the embodiment, the third reflection surface 22 is provided only in a region opposite to the second reflection surface 21 positioned at the vehicle width outermost side among the divided second reflection surfaces 21. The third reflection surface 22 is not provided in regions opposite to the second reflection surfaces 21 disposed in other regions. However, it is also possible to provide a similar third reflection surface 22 in a region opposite to the second reflection surface 21 located in a region adjacent to (or in the vicinity of) the second reflection surface 21 positioned on the vehicle width outermost side.

The third reflection surface 22 reflects, as lateral transmitted light Ls, a portion of the second parallel light L2 reflected by the second reflection surface 21 on the vehicle width outer side. The lateral transmitted light Ls passes through the side surface 18so on the outer side of the exit wall 18 (the side surface facing the vehicle width outer side). The third reflection surface 22 is formed so that reflected light Lsb reflected by the third reflection surface 22 is incident on the side surface 18so on the vehicle width outer side of the exit wall 18 at an incident angle θ1 that does not exceed a critical angle (interface reflection angle). With such setting, the reflected light Lsb reflected by the third reflection surface 22 is refracted at a predetermined angle by the side surface 18so of the exit wall 18 to be emitted toward the vehicle width outer side.
In FIG. 5, a symbol θ2 represents a refraction angle when the reflected light Lsb passes through the side surface 18so (the boundary between the resin layer of the exit wall 18 and an air layer on the outer side thereof) of the exit wall 18, and a symbol Lsa represents the lateral transmitted light Ls after refraction by the side surface 18so. The emission direction of the lateral transmitted light Lsa (Ls) that passes through the side surface 18so is set so that a lateral inclination angle α relative to the vehicle front-rear direction is equal to or greater than a predetermined angle (for example, 80° or more).

The lateral inclination angle α is determined by the inclination or the curved state of the surface of the third inclined surface 22. In the case of the embodiment, the third inclined surface 22 is formed by a concave curved surface that is slightly recessed toward the vehicle rear side. That is, the surface of the third inclined surface 22 changes slightly in three dimensions, and the inclination angle of the surface also changes continuously. As a result, the lateral transmitted light Lsa (Ls) that passes through and is emitted from the side surface 18so of the exit wall 18 travels toward the outer side in the vehicle width direction in various directions. Therefore, according to the configuration, the irradiation direction of light that can be visually recognized from the exterior under sufficient illuminance is expanded.

Here, in the exit wall 18 of the light guide member 11, as mentioned earlier, at least the tip end side region protrudes forward with respect to the front surface of the unit accommodation portion 13b of the lamp housing 13. In addition, the peripheral wall 14b of the outer lens 14 is positioned on the lateral side of a portion of the exit wall 18 protruding forward with respect to the front surface of the unit accommodation portion 13b. Therefore, the lateral transmitted light Lsa (Ls) emitted from the side surface 18so on the vehicle width outer side of the exit wall 18 passes through the peripheral wall 14b of the outer lens 14 and is emitted over a wide range on the vehicle width outer side.

In addition, a reflection surface cover portion 16a covering the front side of the obliquely inclined third reflection surface 22 is provided on the shielding cover 16 disposed in front of the central region of the light guide member 11. As a result, the third reflection surface 22 becomes not visible from the vehicle front side through the coverage by the reflection surface cover portion 16a. A small gap (air layer) is secured between the front surface of the third reflection surface 22 and the reflection surface cover portion 16a.

The turn signal lamp 1 with such configuration can emit light emitted from the light emitting element 10 to the exterior of the vehicle as follows.
When light is emitted from the light emitting element 10 on the substrate 15, such light is input to the incident portion 17 of the light guide member 11. The light input to the incident portion 17 is guided, as the first parallel light L1, through the intermediate light guide wall 19 toward the base end side of the exit wall 18 through the internal reflection (total reflection) due to the first reflection surface 20 of the light guide member 11. At this time, the first parallel light L1 is guided to the base end side of the entire region of the exit wall 18 extending approximately along the outer outline of the intermediate light guide wall 19. The light guided to the base end side of the exit wall 18 is guided, as the second parallel light L2, through the exit wall 18 toward the tip end side through the internal reflection (total reflection) due to the second reflection surface 21. At this time, on the second reflection surface 21 other than the second reflection surface 21 on the vehicle width outer side, approximately the entirety of the second parallel light L2 reflected by the second reflection surface 21 is emitted from the exit surface 50 on the tip end side of the exit wall 18 toward the vehicle front side. The light emitted from the exit surface 50 is diffused by the diffusion portion 51 and emitted toward the vehicle front side. The light so emitted becomes visible mainly from the vehicle front side through the lens main wall 14a of the outer lens 14. However, a portion of the light diffused through the diffusion portion 51 is also emitted in the up-lower direction and the side direction through the peripheral wall 14b of the outer lens 14.

In addition, a portion of the second parallel light L2 created through the reflection on the second reflection surface 21 on the vehicle width outer side of the light guide member 11 is reflected by the third reflection surface 22, while the remainder of the second parallel light L2 is emitted toward the vehicle front side through the exit surface 50 on the tip end side of the exit wall 18. The light passing through the exit surface 50 is emitted toward the vehicle front side in the same manner as described above. Meanwhile, the second parallel light L2 reflected by the third reflection surface 22 passes through the side surface 18so on the vehicle width outer side of the exit wall 18 and is emitted as the lateral transmitted light Ls by being further oriented toward the vehicle width outer side.

In the turn signal lamp 1 of the embodiment, the light guide member 11 includes the incident portion 17 into which the light from the light emitting element 10 is incident, the exit wall 18 whose tip end surface serves as the exit surface 50, and the intermediate light guide wall 19 that guides the light incident on the incident portion 17 to the base end side of the exit wall 18. In addition, the first reflection surface 20 is provided on the incident region of the intermediate light guide wall 19. The first reflection surface 20 internally reflects, as the first parallel light L1, the light incident on the incident portion 17. The second reflection surface 21 is provided on the incident region on the base end side of the exit wall 18. The second reflection surface 21 internally reflects the first parallel light L1 as the second parallel light L2 toward the tip end side of the exit wall 18. Furthermore, the third reflection surface 22 is provided in the region opposite to the second reflection surface 21 on the base end side of the exit wall 18. The third reflection surface 22 reflects a portion of the second parallel light L2 as the lateral transmitted light Ls passing through the side surface 18so on the vehicle width outer side of the exit wall 18. As a result, in the vehicle width outer region of the turn signal lamp 1, a portion of the second parallel light L2 toward the tip end side of the exit wall 18 is emitted to the exterior as the lateral transmitted light Ls passing through the side surface 18so on the outer side of the exit wall 18 through the reflection due to the third reflection wall 22.
Therefore, in the case where the turn signal lamp 1 of the embodiment is adopted, the orientation of the emitted light emitted to the exterior can be further expanded toward the vehicle width outer side.

In addition, in the turn signal lamp 1 of the embodiment, the third reflection surface 22 of the light guide member 11 is formed by a total reflection surface that totally reflects the second parallel light L2. Therefore, in the case where the configuration is adopted, there is no need to attach a reflector to the back portion of the third reflection surface 22 in the light incident direction, and the turn signal lamp 1 can be manufactured easily at a low cost.

Furthermore, in the turn signal lamp 1 of the embodiment, the second reflection surface 21 and the third reflection surface 22 of the light guide member 11 are formed, so that when viewed in the vehicle front-rear direction, the vehicle width inner region of the second reflection surface 21 overlaps with the third reflection surface 22. Therefore, in the case where the configuration is adopted, a portion of the second parallel light L2 reflected by the second reflection surface 21 inside the light guide member 11 can be reliably reflected toward the third reflection surface 22.

Moreover, in the turn signal lamp 1 of the embodiment, the third reflection surface 22 and the side surface 18so on the outer side of the exit wall 18 are formed so that the reflected light reflected by the third reflection surface 22 is input to the side surface on the outer side of the exit wall 18 at an incident angle that does not exceed the critical angle. Therefore, in the case where the configuration is adopted, the reflected light reflected by the third reflection surface 22 reliably passes through the side surface 18so on the outer side of the exit wall 18 and is emitted to the exterior as lateral transmitted light Ls.

As described above, the turn signal lamp 1 (vehicle lamp body device) of the embodiment can expand the visible range of the emitted light to the exterior, so the quality of the turn signal lamp 1 (vehicle lamp body device) can be stabilized, and contribution can be made to Goal 7 of the United Nations' Sustainable Development Goals (SDGs): "Ensure access to affordable, reliable, sustainable and modern energy for all".

The invention is not limited to the above-described embodiment, and various design modifications are possible within the scope that does not deviate from the gist. For example, in the embodiment, the turn signal lamp 1 disposed on the front right side of a motorcycle is shown as the vehicle lamp body device, but the vehicle lamp body device is not limited thereto. The vehicle lamp body device may also be a turn signal lamp disposed on the front left side of the vehicle or a turn signal lamp positioned at the rear of the vehicle. Furthermore, the vehicle lamp body device is not limited to being a turn signal lamp, but may be in other forms such as a brake lamp or a clearance lamp, as long as the lamp body device is a lamp body device that emits light to the front or rear of the vehicle.

In addition, in the embodiment, the third reflection surface 22 of the light guide member 11 is formed by of a total reflection surface that totally reflects the second parallel light. However, the configuration of the third reflection surface 22 is not limited thereto. For example, a metallic reflector may be attached to the back surface side of the second reflection surface 21 in the light incident direction through vapor deposition or other processes..

Furthermore, the vehicle to which the vehicle lamp body device is applied is not limited to a motorcycle, but may be other types of vehicles, such as three-wheeled vehicles or four-wheeled vehicles. Additionally, the vehicle lamp body device can be mounted on a vehicle that does not have a drive source such as an engine or motor.

Moreover, the light source of the vehicle-mounted device is not limited to LEDs, but may be in a form other than LEDs as long as light can be emitted into the incident portion of the light guide member. Furthermore, the number of light sources is not limited to one, and two or more light sources may be provided.

### [Reference Signs List]

1: turn signal lamp (vehicle lamp body); 10: light emitting element (light source), 11: light guide member, 12: lamp body unit, 13: lamp housing, 13a: base, 13b: unit accommodation portion, 13c: opening, 13cu: upper side; 13ci, 13cj: inclined side; 13cl: lower side; 14: Outer lens; 14a: lens main wall; 14b: peripheral wall; 15: substrate; 16: shielding cover; 16a: reflection surface cover portion; 17: incident portion; 18: exit wall; 18si: side surface on the inner side; 18so: side surface on the outer side; 19: intermediate light guide wall; 19f: front surface; 19r: rear surface; 20: first reflection surface; 21: second reflection surface; 22: third reflection surface; 39: support rib; 40: contact seat; 41: boss portion; 42: screw; 50: exit surface; 51: diffusion portion; α: lateral inclination angle; L1: first parallel light; L2: second parallel light; Ls: lateral transmitted light; Lsa: lateral transmitted light; Lsb: reflected light; θ1: incident angle; θ2: refraction angle; o: axis.

## Claims

1. A vehicle lamp body device, comprising:
a light source; and
a light guide member, guiding light incident from the light source to an exit surface as parallel light in a vehicle front-rear direction,
wherein the light guide member comprises:
an incident portion, to which light from the light source is incident;
an exit wall, extending in the vehicle front-rear direction, an end side of the exit wall in an extending direction being arranged as the exit surface;
an intermediate light guide wall, guiding light incident on the incident portion to an other end side of the exit wall;
a first reflection surface, disposed in an incident region of the intermediate light guide wall, and internally reflecting, as first parallel light, light incident on the incident portion toward the other end side of the exit wall;
a second reflection surface, disposed in an incident region on the other end side of the exit wall, and internally reflecting, as second parallel light, the first parallel light toward the end side of the exit wall; and
a third reflection surface, disposed in a region opposite to the second reflection surface on the other end side of the exit wall, and reflecting a portion of the second parallel light as lateral transmitted light passing through a side surface of the exit wall facing an outer side in a vehicle width direction.

2. The vehicle lamp body device as claimed in claim 1, wherein the third reflection surface is a total reflection surface that totally reflects the second parallel light.

3. The vehicle lamp body device as claimed in claim 2, wherein the second reflection surface and the third reflection surface are formed so that, when viewed in a vehicle front-rear direction, an inner region of the second reflection surface in the vehicle width direction is overlapped with the third reflection surface.

4. The vehicle lamp body device as claimed in claim 2 or 3, wherein the third reflection surface and the side surface of the exit wall are formed, so that reflected light reflected by the third reflection surface is input to the side surface of the exit wall at an incident angle that does not exceed a critical angle.
